# EUROPÄISCHE PATENTSCHRIFT

(11) **EP 3 499 269 B1**
(45) Veröffentlichungstag und Bekanntmachung des Hinweises auf die Patenterteilung: **22.02.2023**
(21) Anmeldenummer: 18211870.3
(22) Anmeldetag: 12.12.2018
(51) Int. Cl.: G01S 19/21, G01S 19/22, G01S 19/36

(54) **ANORDNUNG UND VERFAHREN ZUR POSITIONSBESTIMMUNG**
ASSEMBLY AND METHOD FOR POSITIONING
DISPOSITIF ET PROCÉDÉ DE DÉTERMINATION DE LA POSITION

(30) Priorität: 14.12.2017 DE 102017222756
(43) Veröffentlichungstag der Anmeldung: 19.06.2019
(73) Patentinhaber: Continental Automotive Technologies GmbH, 30165 Hannover (DE)
(72) Erfinder: Rombach, Gerhard, 78098 Triberg (DE); Bartholomäus, Ulf, 78112 St. Georgen (DE); Weisser, Alexander Matthias, 78056 Villingen-Schwenningen (DE); Obergfell, Armin, 78166 Donaueschingen (DE)
(74) Vertreter: Continental Corporation

(56) Entgegenhaltungen:
- EP-A1- 2 086 055
- EP-A1- 2 455 781
- EP-A1- 2 650 699
- WO-A1-2008/132165
- WO-A1-2012/066387
- US-A1- 2009 033 550

## Beschreibung

Die Erfindung betrifft eine Anordnung und ein Verfahren zur Positionsbestimmung, insbesondere zur Positionsbestimmung in einer Tachografenanordnung.

Tachografen, oft auch Fahrtenschreiber genannt, sind Kontrollgeräte, die zur Überwachung verschiedener Fahrzeugbetriebsparameter in Kraftfahrzeugen installiert werden. Die zu überwachenden Fahrzeugbetriebsparameter werden meist durch verschiedenste Arten von Sensoren erfasst und vom Tachografen gespeichert und weiterverarbeitet. Fahrzeugbetriebsparameter können beispielsweise Fahrtzeiten, eine zurückgelegte Strecke oder während der zurückgelegten Strecke gefahrene Durchschnitts- und Maximalgeschwindigkeiten sein. Auch bestimmte Ereignisse, wie beispielsweise Lenkzeitunterbrechungen, können vom Tachografen erfasst und gespeichert werden. Die aufgezeichneten und gespeicherten Daten können anschließend ausgelesen werden.

Früher fanden meist mechanische Tachografen Verwendung, welche jedoch vermehrt durch elektronische Tachografen mit digitaler Datenspeicherung ersetzt werden. Derartige Tachografen werden häufig auch als digitale Fahrtenschreiber bezeichnet. In vielen Ländern sind heutzutage digitale Fahrtenschreiber in neu zugelassenen Fahrzeugen, insbesondere in Fahrzeugen zum Gütertransport oder auch in Bussen, vorgeschrieben. Digitale Tachografen können neben den grundsätzlichen Funktionen, wie beispielsweise dem Erfassen und Aufzeichnen der Fahrtstrecke und der Fahrtzeit, häufig auch zusätzliche Funktionen ausführen, wie beispielsweise das Berechnen von Lenk- und Ruhezeiten.

Hierfür ist eine genaue Positionsbestimmung erforderlich, da beispielsweise auch Durchschnitts- und Maximalgeschwindigkeiten sowie die gesamte Lenkzeit anhand von Positionsdaten ermittelt werden.

Die Druckschrift EP 2 086 055 A1 offenbart ein System zur Echtzeit-Mehrpfaderkennung und -abschwächung. Die Druckschrift EP 2 650 699 A1 offenbart eine Vorrichtung zur Detektion von gefälschten Signalen einem Satellitennavigationssystem mit mindestens zwei Antennen mit einem oder mehreren Empfängern zum Empfangen von Navigationssignalen, einer Phasendifferenz-Messeinheit zum Ermitteln von Phasendifferenzen der empfangenen Navigationssignale für jede Antenne, und einer Detektionseinheit zum Erkennen von gefälschten Navigationssignalen unter den empfangenen Navigationssignalen anhand der ermittelten Phasendifferenzen. Die Druckschrift WO 2008/132165 A1 offenbart ein Ortungsverfahren zum Orten eines tragbaren Geräts von einem Server, der zur Kommunikation mit dem tragbaren Gerät über ein drahtloses Kommunikationsnetz konfiguriert ist. Die Druckschrift US 2009/0033550 A1 offenbart ein Steuermodul, das einen Senderabschnitt und einen Signalempfängerabschnitt einer mobilen Vorrichtung miteinander verbindet. Das Steuermodul überwacht den Senderteil des Mobilgeräts und verändert das Mobilgerät auf der Grundlage des überwachten Zustands, um die Fähigkeit eines Sendesignals von einem Sender zu verhindern, den Signalempfängerteil zu stören.

Aufgabe der Erfindung ist es, eine Anordnung und ein Verfahren zur Positionsbestimmung bereitzustellen, bei welchen die Position möglichst genau bestimmt werden kann.

Diese Aufgabe wird durch eine Anordnung gemäß Anspruch 1, einen Tachografen gemäß Anspruch 10 und ein Verfahren gemäß Anspruch 11 gelöst. Ausgestaltungen und Weiterbildungen des Erfindungsgedankens sind Gegenstand von abhängigen Ansprüchen.

Eine Anordnung zur Positionsbestimmung weist ein Gehäuse auf. Die Anordnung weist weiterhin eine erste Antenne auf, die in dem Gehäuse angeordnet ist, und die dazu ausgebildet ist, Satellitensignale von wenigstens einem Satelliten zu empfangen und ein erstes Antennensignal bereitzustellen. Die Anordnung weist weiterhin eine zweite Antenne auf, die außerhalb des Gehäuses angeordnet ist, und die dazu ausgebildet ist, Satellitensignale von wenigstens einem Satelliten zu empfangen und ein zweites Antennensignal bereitzustellen. Die Anordnung weist weiterhin wenigstens eine Empfängereinheit, die innerhalb des Gehäuses angeordnet ist und dazu ausgebildet ist, wenigstens einen Parameter des ersten Antennensignals und wenigstens einen korrespondierenden Parameter des zweiten Antennensignals zu bestimmen, und eine Auswerteeinheit auf, die innerhalb des Gehäuses angeordnet ist und dazu ausgebildet ist, wenigstens einen Parameter des ersten Antennensignals mit wenigstens einem korrespondierenden Parameter des zweiten Antennensignals miteinander zu vergleichen, wobei das Ergebnis des Vergleichs einen Hinweis auf mögliche Störungen der Anordnung oder des Empfangs der Satellitensignale liefert.

Mit einer solchen Anordnung können Ausfälle und Manipulationsversuche sehr zuverlässig erkannt werden. Insgesamt ist die Diagnose-Funktionalität gegenüber herkömmlichen Systemen deutlich verbessert.

Die Anordnung kann eine einzige Empfängereinheit aufweisen, die dazu ausgebildet ist, den wenigstens einen Parameter des ersten Antennensignals und den wenigstens einen Parameter des zweiten Antennensignals zu bestimmen. Die Anordnung kann in diesem Fall weiterhin eine Schalteinheit aufweisen, die dazu ausgebildet ist, die Empfängereinheit entweder mit der ersten Antenne oder mit der zweiten Antenne zu verbinden.

Dadurch kann die Anordnung verhältnismäßig kostengünstig und dennoch zuverlässig implementiert werden.

Die Anordnung kann alternativ jedoch auch eine erste Empfängereinheit, die dazu ausgebildet ist, den wenigstens einen Parameter des ersten Antennensignals zu bestimmen, und eine zweite Empfängereinheit aufweisen, die dazu ausgebildet ist, den wenigstens einen Parameter des zweiten Antennensignals zu bestimmen.

Dadurch können Ausfälle und Manipulationsversuche noch besser erkannt werden. Insgesamt ist die Diagnose-Funktionalität noch weiter verbessert.

Der wenigstens eine Parameter kann ein Träger-Rauschleistungsverhältnis (CNR), eine automatische Verstärkungsregelung (AGC), einen horizontale Lageschätzfehler (EHPE) und/oder eine Zeit bis zur ersten Positionserkennung (TTFF) aufweisen.

Derartige Parameter eignen sich gut, um durch den Vergleich der Parameter zwei verschiedener Antennensignale Fehler, Störungen und Manipulationen zu erkennen.

Die erste Antenne kann dazu ausgebildet sein, reflektierte Satellitensignale zu empfangen und die zweite Antenne kann dazu ausgebildet sein, die Satellitensignale direkt zu empfangen.

Dadurch werden die betrachteten Parameter durch verschiedene mögliche Störungen oder Manipulationsversuche unterschiedlich verändert. Fehler, Störungen und Manipulationsversuche können daher zuverlässiger erkannt werden.

Die erste Antenne kann wenigstens einen vorgegebenen Abstand zu der zweiten Antenne aufweisen. Der vorgegebene Abstand kann dabei beispielsweise wenigstens 0,5 m, wenigstens 1m oder wenigstens 1,5 m betragen.

Auch dadurch werden die betrachteten Parameter durch verschiedene mögliche Störungen oder Manipulationsversuche unterschiedlich verändert. Fehler, Störungen und Manipulationsversuche können daher zuverlässiger erkannt werden.

Die erste Antenne kann eine linear polarisierte Antenne mit einer omnidirektionalen Charakteristik aufweisen. Dadurch kann sie sehr gut reflektierte Signale empfangen.

Die zweite Antenne kann eine circular polarisierte Antenne mit einer direktionalen Charakteristik aufweisen. Dadurch bestehen gute Empfangsbedingungen um die Satellitensignale direkt zu empfangen.

Ein Tachograf kann eine derartige Anordnung aufweisen.

Ein Verfahren zur Positionsbestimmung weist auf: Empfangen von Satellitensignalen von wenigstens einem Satelliten mittels einer ersten in einem Gehäuse angeordneten Antenne und Bereitstellen eines ersten Antennensignals; Empfangen von Satellitensignalen von wenigstens einem Satelliten mittels einer zweiten außerhalb des Gehäuses angeordneten Antenne und Bereitstellen eines zweiten Antennensignals; Bestimmen wenigstens eines Parameters des ersten Antennensignals und wenigstens eines korrespondierenden Parameters des zweiten Antennensignals mittels einer Positionsbestimmungseinheit; und Vergleichen des wenigstens einen Parameters des ersten Antennensignals mit wenigstens einem korrespondierenden Parameter des zweiten Antennensignals mittels der Positionsbestimmungseinheit, wobei das Ergebnis des Vergleichs einen Hinweis auf mögliche Störungen der Anordnung oder des Empfangs der Satellitensignale liefert.

Die Erfindung wird nachfolgend anhand der Figuren der Zeichnung näher erläutert, wobei gleiche oder ähnliche Elemente mit denselben Bezugszeichen versehen sind. Es zeigt:
- Figur 1: in einem Blockschaltbild beispielhaft ein Fahrzeug mit einer Anordnung zur Positionsbestimmung,
- Figur 2: in einem Blockschaltbild eine beispielhafte Anordnung zur Positionsbestimmung,
- Figur 3: in einem Blockschaltbild eine weitere beispielhafte Anordnung zur Positionsbestimmung,
- Figur 4: in einem Blockschaltbild eine weitere beispielhafte Anordnung zur Positionsbestimmung,
- Figur 5: in einem Blockschaltbild eine weitere beispielhafte Anordnung zur Positionsbestimmung, und
- Figur 6: in einem Ablaufdiagramm schematisch das Prinzip eines erfindungsgemäßen Verfahrens.

Fahrtenschreiber oder Tachografen sind für den Einbau in Kraftfahrzeugen bestimmte Geräte zum vollautomatischen oder halbautomatischen Anzeigen, Aufzeichnen, Ausdrucken, Speichern und Ausgeben von Angaben über die Fahrten des Fahrzeugs, einschließlich seiner Fahrgeschwindigkeit sowie Angaben über bestimmte Tätigkeitszeiten des oder der Fahrer des Fahrzeugs. Das Fahrzeug kann beispielsweise ein LKW oder ein Bus sein. Insbesondere Fahrer von LKWs dürfen bestimmte Lenkzeiten nicht überschreiten und müssen im Anschluss an ihre Lenkzeiten vorgegebene Ruhezeiten einhalten.

Daher müssen Tachografen beispielsweise genaue und zuverlässige Daten betreffend den Fahrer, die Tätigkeit des Fahrers und das Fahrzeug aufzeichnen. Beispielsweise werden die zurückgelegte Wegstrecke und Geschwindigkeit des Fahrzeugs, die Identität des Fahrers, die Tätigkeit des Fahrers, Ereignisse und Fehler aufgezeichnet. Zudem können beispielsweise auch Kontroll-, Kalibrierungs- und Tachografen-Reparaturdaten aufgezeichnet werden.

Die Positionsbestimmung eines Tachografen erfolgt meist über GNSS. Ein globales Navigationssatellitensystem (Global Navigation Satellite System, GNSS) ist ein System zur Positionsbestimmung und Navigation auf der Erde und in der Luft durch den Empfang der Signale von Navigationssatelliten und Pseudoliten. Hierzu gehören beispielsweise GPS (Global Positioning System), GLONASS (Global Navigation Satellite System), Galileo und Beidou. Dabei teilen Satelliten der GNSS-Satellitenkonstellation über Funkcodes ihre genaue Position und Uhrzeit mit. Zur Positionsbestimmung muss eine GNSS-Einheit im Empfänger (z.B. im Tachografen) die Signale von mindestens drei Satelliten gleichzeitig empfangen. Die GNSS-Einheit berechnet anhand des Empfangszeitpunktes die Signallaufzeiten und daraus mittels geeigneter Triangulations- oder Multilaterationsverfahren den Standpunkt des Tachografen.

Die von den Satelliten ausgesendeten Signale, welche zur Positionsbestimmung benötigt werden, können jedoch durch Störquellen gestört oder absichtlich manipuliert werden. Bei gestörten Satellitensignalen kann eine ausreichend genaue Positionsbestimmung nicht mehr sichergestellt werden. Über die bestimmten Positionen können die zurückgelegte Strecke sowie die Geschwindigkeit des entsprechenden Fahrzeugs in welchem der Tachograf angeordnet ist ermittelt werden. So können beispielsweise auch Geschwindigkeitsüberschreitungen festgestellt werden. Sind die Satellitensignale über einen längeren Zeitraum gestört oder werden diese manipuliert, kann jedoch keine genaue Geschwindigkeitsbestimmung mehr erfolgen. Die im Tachograf gespeicherten Daten können daher bei gestörten oder manipulierten Satellitensignalen unvollständig oder fehlerhaft sein. Beim Vorliegen fehlerhafter Positionsdaten haben das Transportunternehmen und/oder der Fahrer des entsprechenden Fahrzeugs teils mit schwerwiegenden Konsequenzen zu rechnen. Zudem muss sichergestellt sein, dass Fahrer ihre erlaubten Lenkzeiten nicht überschreiten und ihre vorgeschriebenen Ruhezeiten einhalten.

Eine Störung der Satellitensignale kann beispielsweise dann vorliegen, wenn die GNSS-Einheit entweder zu wenig Satellitensignale empfängt oder wenn die Qualität der empfangenen Satellitensignale nicht ausreichend ist (z.B. zu geringe Empfangsfeldstärke), um eine Positionsbestimmung durchzuführen. Beispielsweise können keine Satellitensignale empfangen werden, wenn das Fahrzeug einen Tunnel durchfährt. Die Satellitensignale können jedoch beispielsweise auch durch Bäume gestört werden, welche die Signale abschatten, oder durch eine dichte Wolkendecke.

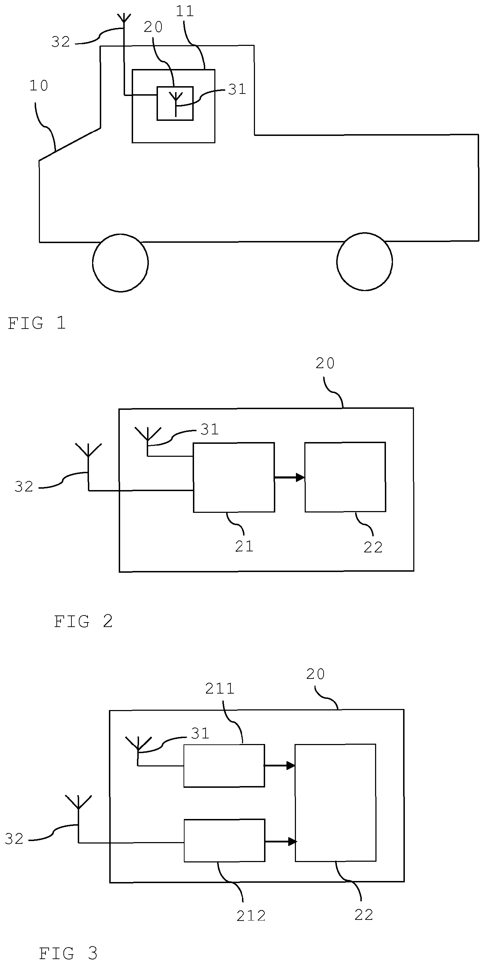

Figur 1 zeigt ein Fahrzeug 10. Das Fahrzeug 10 kann beispielsweise ein LKW oder ein Bus sein. Jegliche andere Art von Fahrzeug ist jedoch ebenfalls möglich. In dem Fahrzeug 10 ist eine Anordnung zur Positionsbestimmung, auch als Positionsbestimmungseinheit 20 bezeichnet, angeordnet. Die Positionsbestimmungseinheit 20 weist eine erste Antenne 31 und eine zweite Antenne 32 auf. Die erste Antenne 31 ist dabei in der Positionsbestimmungseinheit 20 integriert, das heißt, sie ist innerhalb eines Gehäuses der Positionsbestimmungseinheit 20 angeordnet. Die zweite Antenne 32 ist eine externe Antenne. Das heißt, die zweite Antenne 32 ist außerhalb des Gehäuses der Positionsbestimmungseinheit 20 angeordnet. Beispielsweise kann die zweite Antenne 32 auf dem Fahrzeugdach angeordnet sein.

Die zweite Antenne 32 ist derart angeordnet, dass sie im Wesentlichen einen ungestörten Satellitenempfang hat, da die Satellitensignale beispielsweise nicht durch das Fahrzeugdach, andere Fahrzeugteile oder das Gehäuse der Positionsbestimmungseinheit 20 abgeschirmt werden. Die erste Antenne 31 hingegen empfängt keine direkten Satellitensignale, sondern lediglich reflektierte, bzw. abgeschirmte, und somit abgeschwächte Satellitensignale. Wenn die Positionsbestimmungseinheit 20 mit der ersten Antenne 31 in dem Fahrzeug 10 angeordnet ist, werden die Satellitensignale durch die Fahrzeugkarosserie möglicherweise zu stark abgeschwächt, so dass die von der ersten Antenne 31 empfangenen Signale unter Umständen nicht mehr stark genug sind, um noch eine Position bestimmen zu können. Daher kann es vorteilhaft sein, die Positionsbestimmungseinheit 20 innerhalb des Fahrzeugs 10 in der Nähe eines Fahrzeugfensters 11 anzuordnen. Durch das Material der Fahrzeugfenster 11 werden die Satellitensignale in der Regel nicht so stark abgeschwächt, so dass eine Positionsbestimmung möglich ist. Das Gehäuse der Positionsbestimmungseinheit 20 kann aus einem entsprechenden Material gefertigt sein, welches ebenfalls Satellitensignale in ausreichender Stärke passieren lässt. Eine gewisse Abschwächung der Satellitensignale durch Teile des Fahrzeugs 10 und das Gehäuse der Positionsbestimmungseinheit 20 ist jedoch bei der ersten Antenne 31 in jedem Fall gegeben.

Die Positionsbestimmungseinheit 20 kann anhand der mit der ersten Antenne 31 empfangenen Signale eine erste Position bestimmen. Anhand der mit der zweiten Antenne 32 empfangenen Signale kann eine zweite Position bestimmt werden. Die Positionsbestimmungseinheit 20 kann diese beiden Positionen dann beispielsweise miteinander vergleichen und auf ihre Plausibilität hin überprüfen. Weicht die erste Position, die zu einem ersten Zeitpunkt bestimmt wurde, von einer zweiten Position, welche zum selben Zeitpunkt bestimmt wurde, zu stark ab, kann dies beispielsweise ein Hinweis darauf sein, dass der Empfang der Satellitensignale gestört ist, oder dass ein Manipulationsversuch vorliegt.

Durch die Verwendung von zwei verschiedenen Antennen 31, 32 wird eine redundante Auslegung erreicht. Die erste Antenne 31 im Inneren der Positionsbestimmungseinheit 20 dient dabei als Referenzantenne für die zweite Antenne 32 die außerhalb der Positionsbestimmungseinheit 20 angeordnet ist.

Mit einer solchen redundanten Anordnung können Fehler bei der Positionsbestimmung erkannt werden, unabhängig davon ob diese durch schlechten Satellitenempfang oder durch bewusste Manipulationen hervorgerufen werden. Ebenso ist es beispielsweise möglich, mit der beschriebenen Anordnung Ausfälle oder ein fehlerhaftes Verhalten der zweiten Antenne 32 zu detektieren. Generell ist die Diagnose-Funktionalität eines derartigen redundanten Systems wesentlich erweitert und verbessert.

Der Vergleich der bestimmten Positionen miteinander ist jedoch lediglich ein Beispiel. Zusätzlich oder alternativ können die Satellitensignale selbst miteinander verglichen werden. Beispielsweise kann die Qualität der empfangenen Signale miteinander verglichen werden. Alternativ oder zusätzlich kann auch das redundante Verhalten der Positionsbestimmungseinheit 20 mittels geeigneter Algorithmen überprüft werden. Auch das Kaltstart-Verhalten des Systems kann überprüft werden. Kaltstart bedeutet in diesem Zusammenhang, dass zu dem Zeitpunkt, zu welchem die Positionsbestimmungseinheit 20 eingeschaltet wird, keine Satellitensignale empfangen werden und zuerst eine Suche nach Satellitensignalen erfolgen muss. Werden hier starke Abweichungen zwischen der ersten Antenne 31 und der zweiten Antenne 32 detektiert, kann dies ein Hinweis auf einen Fehler sein. Ein Fehler kann beispielsweise auch dann erkannt werden, wenn die Zeit nach dem Einschalten der Positionsbestimmungseinheit 20 und dem Zeitpunkt zu welchem die Position sicher erkannt werden kann (Time To First Fix) zu lange ist. Grundsätzlich sollte die Positionsbestimmungseinheit 20 innerhalb eines bestimmten Zeitraumes ausreichend Satellitensignale empfangen und ihre Position eindeutig bestimmen können.

Wie beispielhaft in Figur 2 dargestellt, können sowohl die mit der ersten Antenne 31 empfangenen Satellitensignale als auch die mit der zweiten Antenne 32 empfangenen Satellitensignale mit einer Empfängereinheit 21 empfangen und ausgewertet werden. Die erste Antenne 31 kann beispielsweise Satellitensignale empfangen und ein erstes Antennensignal zur Auswertung bereitstellen. Die zweite Antenne 32 kann ebenfalls Satellitensignale empfangen und ein zweites Antennensignal zur Auswertung bereitstellen. Die Positionsbestimmungseinheit 20 weist in diesem Beispiel lediglich eine Empfängereinheit 21 auf, welche sowohl die Signale der ersten Antenne 31 als auch die Signale der zweiten Antenne 32 empfängt und auswertet. Die Empfängereinheit kann beispielsweise die Empfangsfeldstärken der empfangenen Signale, die Signalqualität, oder den Zeitpunkt des ersten Empfangs nach dem Einschalten bestimmen. Weiterhin kann die Empfängereinheit 21 beispielsweise auch das Träger-Rauschleistungsverhältnis (Carrier to Noise Ratio, CNR) der Signale bestimmen. Das Träger-Rauschleistungsverhältnis ist das Signal-Rausch-Verhältnis (Signal to Noise Ratio, SNR) eines modulierten Signals. Ebenso ist es möglich die Satelliten-Quellen auszuwerten. Das heißt, es kann ausgewertet werden, ob die Signale beispielsweise von Satelliten des GPS-Systems, des Galileo-Systems oder des Glonass-Systems empfangen werden.

Die Empfängereinheit 21 ist somit dazu ausgebildet, die mit der ersten und der zweiten Antenne 31, 32 empfangenen Signale zu empfangen und wenigstens einen Parameter der empfangenen Signale zu bestimmen. Die von der Empfängereinheit 21 bestimmten Parameter können dann zur weiteren Auswertung an eine Auswerteeinheit 22 gesendet werden. Die Auswerteeinheit 22 kann beispielsweise einen Parameter der ersten Antenne 31 mit dem entsprechenden Parameter der zweiten Antenne 32 vergleichen. Anhand dieses Vergleiches kann die Auswerteeinheit 22 bestimmen ob ein Fehler vorliegt.

Indem die Signale von zwei verschiedenen, räumlich getrennten Antennen 31, 32 ausgewertet werden, kann die Robustheit des Systems deutlich verbessert werden. Die Diagnose und Fehlererkennung ist durch die redundante Auslegung der Antennen wesentlich verbessert. Bei Verwendung lediglich einer Empfangseinheit 21 ist das System zudem recht kostengünstig implementierbar.

Es ist jedoch auch möglich, für jede der Antennen 31, 32 eine separate Empfangseinheit 211, 212 vorzusehen. Eine erste Empfangseinheit 211 kann beispielsweise die Signale der ersten Antenne 31 auswerten, während eine zweite Empfangseinheit 212 die Signale der zweiten Antenne 32 auswertet. Dies ist beispielhaft in Figur 3 dargestellt. In dieser beispielhaften Anordnung sind somit nicht nur die Antennen 31, 32, sondern auch die Empfangseinheiten 211, 212 redundant ausgelegt. Dies erhöht die Redundanz-Eigenschaften und Diagnosefähigkeiten des Systems noch weiter. Zudem ist es möglich, die Signale der ersten Antenne 31 und der zweiten Antenne 32 parallel, das heißt zeitgleich auszuwerten.

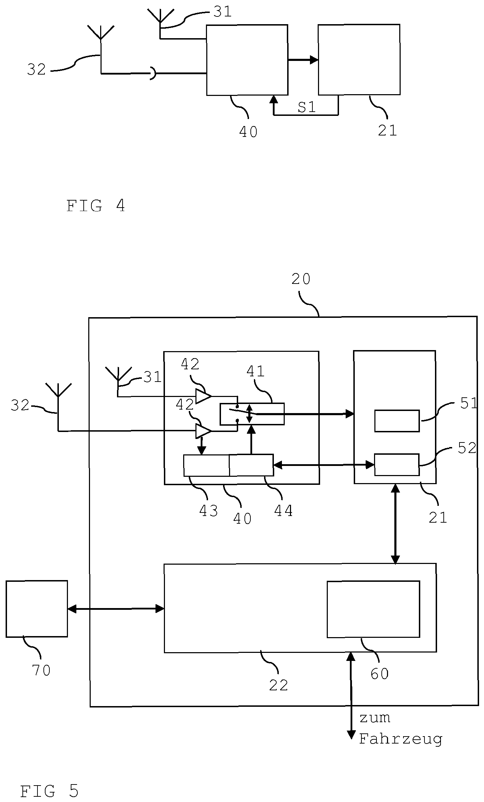

Eine parallele Auswertung der Signale ist bei der Anordnung gemäß Figur 2 nicht möglich. Dies wird im Folgenden anhand von Figur 4 näher erläutert. Insbesondere kann die Empfängereinheit 21 eine Schalteinheit 40 aufweisen oder die Schalteinheit 40 kann der Empfängereinheit 21 vorgeschaltet sein. Die Schalteinheit 40 ist dazu ausgebildet, entweder die erste Antenne 31 mit der Empfängereinheit 21 zu verbinden oder die zweite Antenne 32 mit der Empfängereinheit 21 zu verbinden. Das heißt, zu jedem Zeitpunkt ist entweder nur die erste Antenne 31 oder nur die zweite Antenne 32 mit der Empfängereinheit 21 verbunden. Die Empfängereinheit 21 wertet daher immer nur die Signale einer der beiden Antennen 31, 32 aus, nie jedoch beide gleichzeitig. Die Schalteinheit 40 kann beispielsweise in regelmäßigen Abständen zwischen der ersten Antenne 31 und der zweiten Antenne 32 hin und her schalten. Die Schalteinheit 40 kann diese Schaltvorgänge beispielsweise selbstständig durchführen. Es ist jedoch auch möglich, dass die Schalteinheit 40 durch die Empfängereinheit 21 gesteuert wird. Die Empfängereinheit 21 kann beispielsweise ein entsprechendes Steuersignal S1 an die Schalteinheit 40 senden. Beispielsweise kann das Steuersignal S1 zwei Zustände annehmen. Die Schalteinheit 40 kann die erste Antenne 31 mit der Empfängereinheit 21 verbinden, wenn das Steuersignal S1 einen ersten Zustand annimmt. Wenn das Steuersignal S1 einen zweiten Zustand annimmt, kann die Schalteinheit 40 die zweite Antenne 32 mit der Empfängereinheit 21 verbinden.

Die erste Antenne 31 kann beispielsweise eine linear polarisierte Antenne sein mit einer omnidirektionalen Charakteristik (Kugelcharakteristik) um reflektierte Signale empfangen zu können. Die zweite Antenne 32 kann beispielsweise eine circular polarisierte Antenne sein mit einer direktionalen Charakteristik (Keulencharakteristik) . Dadurch kann die Position sehr präzise und unter guten Empfangsbedingungen (möglichst viele verfügbare Satelliten) erfolgen.

Die Anordnung kann beispielsweise noch weiter verbessert werden, indem die Herkunft der empfangenen Satellitensignale überprüft wird. Dies soll zukünftig mittels der so genannten Navigation Message Authentication möglich sein. Dabei kann anhand der empfangenen Signale überprüft werden, ob die Signale tatsächlich von einem Satelliten des verwendeten Systems stammen. Wird beispielsweise das Galileo-System verwendet, kann dadurch überprüft werden, ob die Signale tatsächlich von Satelliten des Galileo-Systems ausgesendet wurden. Dadurch kann sichergestellt werden, dass keine fehlerhaften oder manipulierten Satellitensignale fremder Satelliten empfangen werden. Satellitensignale können beispielsweise auch bewusst durch fremde Signale überlagert werden (so genannte Spoofing-Attacks), so dass in der Empfängereinheit 21 falsche, bzw. manipulierte Signale empfangen werden. Ein solcher Angriff kann mittels der Navigation Message Authentication ebenfalls erkannt werden. Manipulierte Signale können beispielsweise durch Betrachtung des empfangenen Leistungsspektrums erkannt werden.

Weisen die erste Antenne 31 und die zweite Antenne 32 einen ausreichend großen Abstand zueinander auf (z.B. mehr als 0,5 m, mehr als 1 m oder mehr als 1,5 m), und sind beispielsweise zusätzlich noch durch eine Wandung (z.B. Fahrzeugdach) voneinander getrennt, können durch Umschalten zwischen den Antennen 31, 32 und vergleichen der Parameter der jeweiligen Signale Rückschlüsse auf die Umgebung gemacht werden. Ausgewertete Parameter können beispielsweise sein das Träger-Rauschleistungsverhältnis CNR, die automatische Verstärkungsregelung (Amplifier Gain Control oder Automatic Gain Control, AGC), der horizontale Lageschätzfehler (Estimated Horizontal Position Error, EHPE), oder die Zeit bis zur ersten Positionserkennung (Time to First Fix, TTFF) sein. Andere zusätzliche oder alternative Parameter können ebenfalls ausgewertet werden.

Beispielsweise ist das Träger-Rauschleistungsverhältnis CNR der ersten Antenne 31 im Inneren des Fahrzeugs 10 aufgrund der Tatsache, dass mit dieser Antenne 31 reflektierte Signale empfangen werden immer geringer als das Träger-Rauschleistungsverhältnis CNR der zweiten Antenne 32 außerhalb des Fahrzeugs 10. Aus dem Unterschied (Delta) der ermittelten Werte für beide Antennen 31, 32 können beispielsweise Rückschlüsse darauf getroffen werden, ob Störungen vorliegen.

| CNR zweite Antenne | CNR erste Antenne | Delta | Indikation |
|---|---|---|---|
| (CNR2) | (CNR1) | (CNR2 - CNR1) | |
| Hoch/Mittel | Hoch/Mittel | klein | Normal |
| Niedrig/Mittel | Hoch/Mittel | negativ | Externer Störer |
| Kein Signal | Hoch/Mittel | | Externer Antennenfehler |
| Hoch | niedrig | groß | Interner Störer |
| Hoch | Kein Signal | | Starker interner Störer / Antennenfehler |

Die dargestellte Tabelle zeigt beispielhaft welche Rückschlüsse für verschiedene Konstellationen gezogen werden können. Ist beispielsweise das Träger-Rauschleistungsverhältnis CNR bei beiden Antennen 31, 32 mittel bis hoch, ergibt sich ein relativ geringer Unterschied zwischen den beiden Werten (CNR2 - CNR1) . Daraus kann geschlossen werden, dass das System normal funktioniert und keine Störungen vorliegen. Ist das Träger-Rauschleistungsverhältnis CNR der zweiten Antennen 32 geringer als das Träger-Rauschleistungsverhältnis CNR der ersten Antenne 31, ergibt sich ein negatives Delta (CNR2 - CNR1). Dies ist ein Hinweis auf einen externen Störer. Das heißt, der Empfang der zweiten Antenne 32 könnte gestört sein, beispielsweise durch externe Störquellen. Externe Störquellen können Signale aussenden, welche die Satellitensignale überlagern und dadurch Störungen hervorrufen.

Wird mit der zweiten Antenne 32 kein Signal empfangen, kann das Träger-Rauschleistungsverhältnis CNR der zweiten Antennen nicht bestimmt werden und somit keine Differenz gebildet werden. Dies ist ein Hinweis auf einen externen Antennenfehler. Das heißt, die zweite Antenne 32 ist möglicherweise komplett ausgefallen und kann keine Signale empfangen. Ist das Träger-Rauschleistungsverhältnis CNR der zweiten Antenne 32 hoch und das Träger-Rauschleistungsverhältnis CNR der ersten Antenne 31 niedrig, ergibt sich ein großes Delta. Dies kann ein Hinweis darauf sein, dass interne Störer vorliegen. Das heißt, dass beispielsweise Geräte im Inneren des Fahrzeugs Signale aussenden, welche die reflektierten Satellitensignale überlagern und dadurch abschwächen. Ist das Träger-Rauschleistungsverhältnis CNR der zweiten Antenne 32 beispielsweise hoch und wird gleichzeitig mit der ersten Antenne 31 kein Signal empfangen (Bestimmung des Träger-Rauschleistungsverhältnis CNR nicht möglich), kann dies ein Hinweis sein auf einen sehr starken internen Störer. Das heißt, die reflektierten Satellitensignale könnten so stark überlagert sein, dass eine Positionsbestimmung nicht mehr möglich ist. Ebenso besteht in diesem Fall die Möglichkeit, dass die erste Antenne 31 defekt ist und aus diesem Grund keine Signale empfangen kann.

Ein hohes Träger-Rauschleistungsverhältnis CNR bedeutet in diesem Zusammenhang bei zirkular polarisierten Antennen beispielsweise Werte von CNR > 40dB/Hz. Ein mittleres Träger-Rauschleistungsverhältnis CNR bedeutet in diesem Zusammenhang bei zirkular polarisierten Antennen beispielsweise Werte von etwa 25dB/Hz < CNR < 40dB/Hz, und ein niedriges Träger-Rauschleistungsverhältnis CNR bedeutet in diesem Zusammenhang bei zirkular polarisierten Antennen beispielsweise Werte von CNR < 25dB/Hz.

Auf die selbe Art und Weise können alternativ oder zusätzlich weitere Parameter der empfangenen Signale miteinander verglichen werden und Rückschlüsse aus dem Vergleich gezogen werden. Wird beispielsweise der horizontale Lageschätzfehler (Estimated Horizontal Position Error, EHPE) betrachtet, kann eine stark unterschiedliche Genauigkeit zwischen der ersten Antenne 31 und der zweiten Antenne 32 ein Hinweis auf eine Störung oder möglicherweise auch auf einen Manipulationsversuch sein. Auch die automatische Verstärkungsregelung (Amplifier Gain Control oder Automatic Gain Control, AGC) kann beispielsweise ein nützlicher Indikator sein. Die automatische Verstärkungsregelung einer Antenne ist bei schlechtem Empfang in der Regel hoch, und bei gestörtem Empfang eher klein.

Wird zum Beispiel die Zeit bis zur ersten Positionserkennung (Time to First Fix, TTFF) nach einem Kaltstart (Cold start) betrachtet, kann beispielsweise ein Mittelwert über mehrere Kaltstarts gebildet werden. Liegt dieser Mittelwert unterhalb eines vorgegebenen Grenzwertes (z.B. unter einer Minute) und liegt gleichzeitig das Träger-Rauschleistungsverhältnis CNR der entsprechenden Antenne bei über 40dB/Hz, kann daraus geschlossen werden, dass der Empfang nicht gestört ist.

Liegt der Mittelwert der Zeit bis zur ersten Positionserkennung knapp unterhalb oder knapp oberhalb des vorgegebenen Grenzwertes (z. B. eine Minute ± 10 Sekunden) und ist gleichzeitig das Träger-Rauschleistungsverhältnis CNR kleiner als 40dB/Hz, kann daraus geschlossen werden, dass der Empfang mit der entsprechenden Antenne gedämpft ist.

Liegt der Mittelwert der Zeit bis zur ersten Positionserkennung knapp unterhalb oder oberhalb des vorgegebenen Grenzwertes (z.B. eine Minute ± 10 Sekunden), ist gleichzeitig das Träger-Rauschleistungsverhältnis CNR kleiner als 40dB/Hz, und zusätzlich die Streuung des ermittelten Träger-Rauschleistungsverhältnis CNR sehr groß, kann daraus geschlossen werden, dass im Umfeld der entsprechenden Antenne Störer vorhanden sind.

Die oben erläuterten Indikation sind dabei lediglich Beispiele. Auf die selbe Art und Weise können jegliche sinnvolle Parameter der empfangenen Signale ausgewertet werden und anhand der Auswertung auf den Betrieb der Antennen geschlossen werden.

Figur 5 zeigt beispielhaft eine weitere Anordnung zur Positionsbestimmung 20. Die Anordnung weist eine Schalteinheit 40, eine Empfängereinheit 21 und eine Auswerteeinheit 22 auf. Die Empfängereinheit 21 ist, wie oben beschrieben, über die Schalteinheit 40 mit der ersten Antenne 31 und der zweiten Antenne 32 verbunden. Die Schalteinheit 40 weist einen Schalter 41 auf, der dazu ausgebildet ist, zwischen der ersten Antenne 31 und der zweiten Antenne 32 hin und her zu schalten. Zwischen den Antennen 31, 32 und dem Schalter 41 können Verstärker 42 angeordnet sein, die dazu ausgebildet sind die empfangenen Satellitensignale zu verstärken. Wie oben beschrieben, kann beispielsweise die automatische Verstärkungsregelung (Amplifier Gain Control oder Automatic Gain Control, AGC) ausgewertet werden. Hierfür kann die Schalteinheit 40 beispielsweise eine Verstärker-Auswerteeinheit 43 aufweisen.

Die Schalteinheit 40 kann weiterhin eine Schalter-Steuereinheit 44 aufweisen, die dazu ausgebildet ist den Schalter 41 anzusteuern. Die Schalter-Steuereinheit 44 kann beispielsweise Steuersignale S1 von einer Antennen- und GNSS-Steuereinheit 52 in der Empfängereinheit 21 empfangen. Zudem können Signale von der Verstärker-Auswerteeinheit 43 und der Schalter-Steuereinheit 44 an die Empfängereinheit 21, bzw. die Antennen- und GNSS-Steuereinheit 52 übertragen werden.

Die Empfängereinheit 21 kann weiterhin einen Speicher 51 (z.B. Start-Up Memory) aufweisen. Darin können die empfangenen Signale beispielsweise vorübergehend gespeichert werde, bis diese von der Antennen- und GNSS-Steuereinheit 52 ausgewertet werden. Die Antennen- und GNSS-Steuereinheit 52 kann beispielsweise, wie oben beschrieben, wenigstens einen Parameter der Signale bestimmen. Die bestimmten Parameter kann die Antennen- und GNSS-Steuereinheit 52 dann an die Auswerteeinheit 22 zur Auswertung senden. Die Auswerteeinheit 22 kann beispielsweise die in Bezug auf die erste Antenne 31 bestimmten Parameter mit den entsprechenden Parametern vergleichen, welche in Bezug auf die zweite Antenne 32 bestimmt wurden. Die Auswerteeinheit 22 kann beispielsweise ein Systemcontroller sein oder einen Systemcontroller aufweisen. Die Auswerteeinheit 22 kann beispielsweise ein Auswertemodul 60 aufweisen, in welchem der Vergleich der Parameter durchgeführt werden kann.

Die Auswerteeinheit 22 kann eine Verbindung zu weiteren Komponenten und Einheiten im Fahrzeug 10 aufweisen. Optional kann die Auswerteeinheit auch mit einem Bewegungssensor 70 verbunden sein und Daten von dem Bewegungssensor 70 empfangen. Die Daten des Bewegungssensors 70 können beispielsweise in den Vergleich der Antennenparameter mit einbezogen werden. Dadurch kann die Vertrauenswürdigkeit der Antennendaten beispielsweise erhöht werden. Weiterhin kann auch ein Integrationstest anhand der Daten des Bewegungssensors 70 erfolgen. Störungen können unter Einbeziehung der Daten eines Bewegungssensors 70 zudem noch besser erkannt werden.

Die Positionsbestimmungseinheit 20 kann in einem Tachografen angeordnet sein.

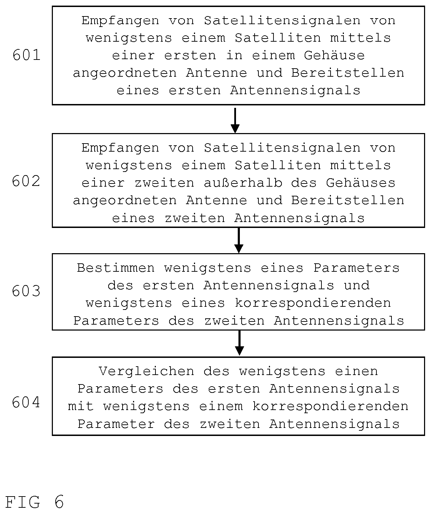

Ein entsprechendes Verfahren ist beispielhaft in Figur 6 dargestellt. Werden Satellitensignale von wenigstens einem Satelliten mittels einer ersten in einem Gehäuse angeordneten Antenne empfangen und ein erstes Antennensignal bereitgestellt (Schritt 601) . Weiterhin werden Satellitensignale von wenigstens einem Satelliten mittels einer zweiten außerhalb des Gehäuses angeordneten Antenne empfangen und ein zweites Antennensignal bereitgestellt (Schritt 602). Wenigstens ein Parameter des ersten Antennensignals und wenigstens ein korrespondierender Parameter des zweiten Antennensignals wird bestimmt (Schritt 603). Der wenigstens eine Parameter des ersten Antennensignals wird mit wenigstens einem korrespondierenden Parameter des zweiten Antennensignals verglichen (Schritt 604), wobei das Ergebnis des Vergleichs einen Hinweis auf mögliche Störungen der Anordnung oder des Empfangs der Satellitensignale liefert.

Die Erfindung wurde am Beispiel einer Tachografenanordnung beschrieben. Generell kann eine derartige Anordnung zur Positionsbestimmung jedoch überall dort zum Einsatz kommen, wo ein störungsfreier Betrieb und eine hohe Ausfallsicherheit gefordert werden. Beispielsweise ist es auch bei elektronischen Mauterfassungssystemen sowie verschiedensten Anzeigen, Instrumenten oder Telematik-Systemen erforderlich, jederzeit zuverlässig die Position des entsprechenden Fahrzeugs bestimmen zu können. Auch in jeglichen anderen ECUs (Electronic Control Units), kann eine Anordnung zur Positionsbestimmung zum Einsatz kommen.

## Patentansprüche

1. Anordnung zur Positionsbestimmung (20), wobei die Anordnung aufweist
ein Gehäuse;
eine erste Antenne (31), die dazu ausgebildet ist, Satellitensignale von wenigstens einem Satelliten zu empfangen und ein erstes Antennensignal bereitzustellen;
eine zweite Antenne (32), die dazu ausgebildet ist, Satellitensignale von wenigstens einem Satelliten zu empfangen und ein zweites Antennensignal bereitzustellen;
wenigstens eine Empfängereinheit (21, 211, 212), die innerhalb des Gehäuses angeordnet ist und dazu ausgebildet ist, wenigstens einen Parameter des ersten Antennensignals und wenigstens einen korrespondierenden Parameter des zweiten Antennensignals zu bestimmen; und
eine Auswerteeinheit (22), die innerhalb des Gehäuses angeordnet ist und dazu ausgebildet ist, wenigstens einen Parameter des ersten Antennensignals mit wenigstens einem korrespondierenden Parameter des zweiten Antennensignals miteinander zu vergleichen, wobei
das Ergebnis des Vergleichs einen Hinweis auf mögliche Störungen der Anordnung oder des Empfangs der Satellitensignale liefert;
**dadurch gekennzeichnet, dass**
die erste Antenne (31) innerhalb und die zweite Antenne (32) außerhalb des Gehäuses angeordnet ist.

2. Anordnung nach Anspruch 1, wobei
die Anordnung eine einzige Empfängereinheit (21) aufweist, die dazu ausgebildet ist, den wenigstens einen Parameter des ersten Antennensignals und den wenigstens einen Parameter des zweiten Antennensignals zu bestimmen; und
die Anordnung weiterhin eine Schalteinheit (40) aufweist, die dazu ausgebildet ist, die Empfängereinheit (21) entweder mit der ersten Antenne (31) oder mit der zweiten Antenne (32) zu verbinden.

3. Anordnung nach Anspruch 1, wobei
die Anordnung eine erste Empfängereinheit (211) aufweist, die dazu ausgebildet ist, den wenigstens einen Parameter des ersten Antennensignals zu bestimmen; und
die Anordnung weiterhin eine zweite Empfängereinheit (212) aufweist, die dazu ausgebildet ist, den wenigstens einen Parameter des zweiten Antennensignals zu bestimmen.

4. Anordnung nach einem der Ansprüche 1 bis 3, wobei der wenigstens eine Parameter wenigstens eines aufweist von
ein Träger-Rauschleistungsverhältnis (CNR);
eine automatische Verstärkungsregelung (AGC);
einen horizontale Lageschätzfehler (EHPE); und
eine Zeit bis zur ersten Positionserkennung (TTFF).

5. Anordnung nach einem der vorhergehenden Ansprüche, wobei
die erste Antenne (31) dazu ausgebildet ist, reflektierte Satellitensignale zu empfangen; und
die zweite Antenne (32) dazu ausgebildet ist, die Satellitensignale direkt zu empfangen.

6. Anordnung nach einem der vorhergehenden Ansprüche, wobei
die erste Antenne (31) wenigstens einen vorgegebenen Abstand zu der zweiten Antenne (32) aufweist.

7. Anordnung nach Anspruch 6, wobei der vorgegebene Abstand wenigstens 0,5 m, wenigstens 1 m oder wenigstens 1,5 m beträgt.

8. Anordnung nach einem der vorhergehenden Ansprüche, wobei die erste Antenne (31) eine linear polarisierte Antenne mit einer omnidirektionalen Charakteristik aufweist.

9. Anordnung nach einem der vorhergehenden Ansprüche, wobei die zweite Antenne (32) eine circular polarisierte Antenne mit einer direktionalen Charakteristik aufweist.

10. Tachograf mit einer Anordnung nach einem der Ansprüche 1 bis 9.

11. Verfahren zur Positionsbestimmung, wobei das Verfahren aufweist
Empfangen von Satellitensignalen von wenigstens einem Satelliten mittels einer ersten Antenne (31) und Bereitstellen eines ersten Antennensignals;
Empfangen von Satellitensignalen von wenigstens einem Satelliten mittels einer zweiten Antenne (32) und Bereitstellen eines zweiten Antennensignals;
Bestimmen wenigstens eines Parameters des ersten Antennensignals und wenigstens eines korrespondierenden Parameters des zweiten Antennensignals mittels einer Positionsbestimmungseinheit (20); und
Vergleichen des wenigstens einen Parameters des ersten Antennensignals mit wenigstens einem korrespondierenden Parameter des zweiten Antennensignals mittels der Positionsbestimmungseinheit (20), wobei
das Ergebnis des Vergleichs einen Hinweis auf mögliche Störungen der Anordnung oder des Empfangs der Satellitensignale liefert;
**dadurch gekennzeichnet, dass**
die erste Antenne (31) innerhalb und die zweite Antenne (32) außerhalb eines Gehäuses der Positionsbestimmungseinheit (20) angeordnet ist.

## Claims

1. Position determination arrangement (20), wherein the arrangement has a housing;
a first antenna (31) that is designed to receive satellite signals from at least one satellite and to provide a first antenna signal;
a second antenna (32) that is designed to receive satellite signals from at least one satellite and to provide a second satellite signal;
at least one receiver unit (21, 211, 212) that is arranged inside the housing and is designed to determine at least one parameter of the first antenna signal and at least one corresponding parameter of the second antenna signal; and
an evaluation unit (22) that is arranged inside the housing and is designed to compare at least one parameter of the first antenna signal with at least one corresponding parameter of the second antenna signal with one another, wherein
the result of the comparison delivers an indication of possible interference with the arrangement or with the reception of the satellite signals;
**characterized in that**
the first antenna (31) is arranged inside the housing and the second antenna (32) is arranged outside the housing.

2. Arrangement according to Claim 1, wherein
the arrangement has a single receiver unit (21) that is designed to determine the at least one parameter of the first antenna signal and the at least one parameter of the second antenna signal; and
the arrangement furthermore has a switching unit (40) that is designed to connect the receiver unit (21) either to the first antenna (31) or to the second antenna (32).

3. Arrangement according to Claim 1, wherein
the arrangement has a first receiver unit (211) that is designed to determine the at least one parameter of the first antenna signal; and
the arrangement furthermore has a second receiver unit (212) that is designed to determine the at least one parameter of the second antenna signal.

4. Arrangement according to one of Claims 1 to 3, wherein the at least one parameter is at least one of
a carrier-to-noise ratio (CNR);
automatic gain control (AGC);
an estimated horizontal position error (EHPE); and
a time to first fix (TTFF).

5. Arrangement according to one of the preceding claims, wherein
the first antenna (31) is designed to receive reflected satellite signals; and
the second antenna (32) is designed to receive the satellite signals directly.

6. Arrangement according to one of the preceding claims, wherein
the first antenna (31) has at least a predefined spacing from the second antenna (32).

7. Arrangement according to Claim 6, wherein the predefined spacing is at least 0.5 m, at least 1 m or at least 1.5 m.

8. Arrangement according to one of the preceding claims, wherein the first antenna (31) is a linear polarized antenna with an omnidirectional characteristic.

9. Arrangement according to one of the preceding claims, wherein the second antenna (32) is a circular polarized antenna with a directional characteristic.

10. Tachograph having an arrangement according to one of Claims 1 to 9.

11. Position determination method, wherein the method comprises
receiving satellite signals from at least one satellite by way of a first antenna (31) and providing a first antenna signal;
receiving satellite signals from at least one satellite by way of a second antenna (32) and providing a second antenna signal;
determining at least one parameter of the first antenna signal and at least one corresponding parameter of the second antenna signal by way of a position determination unit (20); and
comparing the at least one parameter of the first antenna signal with at least one corresponding parameter of the second antenna signal by way of the position determination unit (20), wherein
the result of the comparison delivers an indication of possible interference with the arrangement or with the reception of the satellite signals;
**characterized in that**
the first antenna (31) is arranged inside a housing of the position determination unit (20) and the second antenna (32) is arranged outside a housing of the position determination unit (20).

## Revendications

1. Agencement de détermination de position (20), l'agencement présentant un boîtier;
une première antenne (31) qui est réalisée pour recevoir des signaux de satellite d'au moins un satellite et pour fournir un premier signal d'antenne ;
une deuxième antenne (32) qui est réalisée pour recevoir des signaux de satellite d'au moins un satellite et pour fournir un deuxième signal d'antenne ;
au moins une unité de réception (21, 211, 212) qui est disposée à l'intérieur du boîtier et est réalisée pour déterminer au moins un paramètre du premier signal d'antenne et au moins un paramètre correspondant du deuxième signal d'antenne ; et
une unité d'évaluation (22) qui est disposée à l'intérieur du boîtier et est réalisée pour comparer au moins un paramètre du premier signal d'antenne avec au moins un paramètre correspondant du deuxième signal d'antenne, dans lequel
le résultat de la comparaison fournit une indication concernant des perturbations possibles de l'agencement ou de la réception des signaux de satellite ;
**caractérisé en ce que** la première antenne (31) est disposée à l'intérieur du boîtier et la deuxième antenne (32) est disposée à l'extérieur du boîtier.

2. Agencement selon la revendication 1, dans lequel
l'agencement présente une seule unité de réception (21) qui est réalisée pour déterminer ledit au moins un paramètre du premier signal d'antenne et ledit au moins un paramètre du deuxième signal d'antenne ; et
l'agencement présente en outre une unité de commutation (40) qui est réalisée pour relier l'unité de réception (21) soit à la première antenne (31), soit à la deuxième antenne (32).

3. Agencement selon la revendication 1, dans lequel
l'agencement présente une première unité de réception (211) qui est réalisée pour déterminer ledit au moins un paramètre du premier signal d'antenne ; et
l'agencement présente en outre une deuxième unité de réception (212) qui est réalisée pour déterminer ledit au moins un paramètre du deuxième signal d'antenne.

4. Agencement selon l'une quelconque des revendications 1 à 3, dans lequel ledit au moins un paramètre présente au moins un élément parmi
un rapport porteuse/bruit (CNR) ;
une commande automatique de gain (AGC) ;
une erreur d'estimation de position horizontale (EHPE) ; et
un délai jusqu'à la première détection de position (TTFF).

5. Agencement selon l'une quelconque des revendications précédentes, dans lequel
la première antenne (31) est réalisée pour recevoir des signaux de satellite réfléchis ; et
la deuxième antenne (32) est réalisée pour recevoir les signaux de satellite directement.

6. Agencement selon l'une quelconque des revendications précédentes, dans lequel la première antenne (31) présente au moins une distance prédéfinie par rapport à la deuxième antenne (32).

7. Agencement selon la revendication 6, dans lequel la distance prédéfinie mesure au moins 0,5 m, au moins 1 m ou au moins 1,5 m.

8. Agencement selon l'une quelconque des revendications précédentes, dans lequel la première antenne (31) présente une antenne à polarisation linéaire et à caractéristique omnidirectionnelle.

9. Agencement selon l'une quelconque des revendications précédentes, dans lequel la deuxième antenne (32) présente une antenne à polarisation circulaire et à caractéristique directionnelle.

10. Tachygraphe, comprenant un agencement selon l'une quelconque des revendications 1 à 9.

11. Procédé de détermination de position, le procédé présentant les étapes consistant à
recevoir des signaux de satellite d'au moins un satellite au moyen d'une première antenne (31) et fournir un premier signal d'antenne ;
recevoir des signaux de satellite d'au moins un satellite au moyen d'une deuxième antenne (32) et fournir un deuxième signal d'antenne ;
déterminer au moins un paramètre du premier signal d'antenne et au moins un paramètre correspondant du deuxième signal d'antenne au moyen d'une unité de détermination de position (20) ; et
comparer ledit au moins un paramètre du premier signal d'antenne avec au moins un paramètre correspondant du deuxième signal d'antenne au moyen de l'unité de détermination de position (20), dans lequel
le résultat de la comparaison fournit une indication concernant des perturbations possibles de l'agencement ou de la réception des signaux de satellite ;
**caractérisé en ce que** la première antenne (31) est disposée à l'intérieur d'un boîtier et la deuxième antenne (32) est disposée à l'extérieur d'un boîtier de l'unité de détermination de position (20).
